# EUROPEAN PATENT SPECIFICATION

(11) **EP 3 864 928 B1**
(45) Date of publication and mention of the grant of the patent: **02.12.2026**
(21) Application number: 19786560.3
(22) Date of filing: 09.10.2019
(51) Int. Cl.: H04W 76/27, H04W 60/00

(54) **APPARATUSES, METHODS, COMPUTER PROGRAMS, AND COMPUTER PROGRAM PRODUCTS FOR SUPPORTING MUTUALLY EXCLUSIVE ACCESS TO NETWORK SLICES**
VORRICHTUNGEN, VERFAHREN, COMPUTERPROGRAMME UND COMPUTERPROGRAMMPRODUKTE ZUR UNTERSTÜTZUNG VON GEGENSEITIG EXKLUSIVEM ZUGRIFF AUF NETZWERK-SLICES
APPAREILS, PROCÉDÉS, PROGRAMMES INFORMATIQUES ET PRODUITS PROGRAMMES INFORMATIQUES DE PRISE EN CHARGE D'UN ACCÈS MUTUELLEMENT EXCLUSIF À DES TRANCHES DE RÉSEAU

(30) Priority: 09.10.2018 US 201862743271 P
(43) Date of publication of application: 18.08.2021
(73) Proprietor: Telefonaktiebolaget LM Ericsson (publ), 164 83 Stockholm (SE)
(72) Inventor: HEDMAN, Peter, 252 50 Helsingborg (SE)
(74) Representative: Ericsson
(86) International application number: PCT/EP2019/077342
(87) International publication number: WO 2020/074573

(56) References cited:
- "3rd Generation Partnership Project; Technical Specification Group Services and System Aspects; Study on Enhancement of Network Slicing (Release 16)", 3GPP STANDARD; TECHNICAL REPORT; 3GPP TR 23.740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.0, 5 September 2018 (2018-09-05), pages 1 - 55, XP051475218

## Description

### TECHNICAL FIELD

Disclosed are embodiments related to mutually exclusive access to network slices (MEANS).

### BACKGROUND

The 3GPP TR 23.740 V0.5.0, published on 5 September 2018, presents as a key issue ("Key Issue#1"), "Mutually Exclusive Access to Network Slices" (MEANS). TR 23.740 States that several scenarios addressing access control to mutually exclusive Network Slices have been identified, i.e. due to deployment, regulation or per SLA, some UEs may be restricted from using two Services (S-NSSAIs) simultaneously.

This issue has presented a number of questions that must be addressed.

### SUMMARY

The invention is defined by the appended claims.

According to some embodiments, a change of a MEANS group possibly can be done from either a CM-CONNECTED state or from a CM-IDLE state, with or without indicating a Globally Unique AMF ID (GUAMI).

The above and other embodiments are described below.

### BRIEF DESCRIPTION OF THE DRAWINGS

The accompanying drawings, which are incorporated herein and form part of the specification, illustrate various embodiments.
FIG. 1 illustrates a network architecture according to some embodiments.
FIG. 2. is a flow chart illustrating a process according to some embodiments.
FIG. 3 is a diagram showing functional modules of a UE according to some embodiments.
FIG. 4is a block diagram of a UE according to some embodiments.

### DETAILED DESCRIPTION

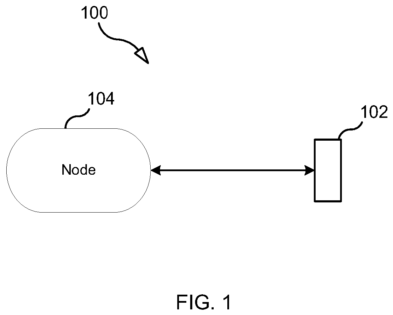

FIG. 1 illustrates system 100, including a User Equipment (UE) 102 and a network node 104. Network node 104 may include an AMF. UE 102 and network node 104 may be communicatively coupled to each other, such as, for example, through 3G, 4G, 5G network protocols.

According to the present disclosure, a method, a UE, a computer program and a carrier according to the independent claims are provided. Developments are set forth in the dependent claims.

A UE may try to add another Single Network Slice Selection Assistance Information (S-NSSAI) from the Configured NSSAI while the UE is in CM-CONNECTED or from CM-IDLE while still indicating the valid GUAMI. However, MEANS seems to drive the need for the UE to access the network again from CM-IDLE without indicating GUAMI from an old registration so as to allow the 5G-AN to select 5GC based on a Requested NSSAI. Another option would be to allow re-allocation to new slices while the UE is in the state CM-CONNECTED.

Regarding not requiring UEs to go through CM-IDLE when re-allocation of network slices are possible while in CM-CONNECTED, it is proposed that the network should be able to indicate whether the UE shall request access to another MEANS group from CM-IDLE without indicating GUAMI or 5G-S-TMSI in 5G-AN signalling (i.e. to trigger the 5G-AN to do the selection) or whether the UE can request such access while in CM-CONNECTED (i.e. as 5GS will enable re-allocation even if e.g. PDU session for another MEANS group is established). In embodiments, the indication may either be provided together with information about the MEANS groups provided to the UE, or the indication may be sent by the AMF separately. If sent separately, the information could be to which MEANS group(s) the UE may use the more efficient change while being connected to the current AMF i.e. while in CM-CONNECTED. Alternatively the UE may be configured with the information.

Such indication can be provided independent of how MEANS groups are communicated to the UE and realized in the network.

In embodiments, the network, e.g. AMF, may indicate to which MEANS groups the UE can use the more efficient re-allocation while staying in CM-CONNECTED for the current Registration (Allowed NSSAI). The network, e.g. AMF, may provide such information as part of the Registration Accept message or as part of UE Configuration Update procedure.
Other ways of providing such information are also possible, and may depend on the particular approach to providing MEANS groups.

Embodiments enable the UE to know whether an efficient re-allocation/change of Network Slices (e.g. changing the Requested NSSAI compared to Allowed NSSAI by e.g. adding more S-NSSAIs from the Configured NSSAI) or MEANS group can be enabled while the UE is in CM-CONNECTED or whether the UE has to go through CM-IDLE state.

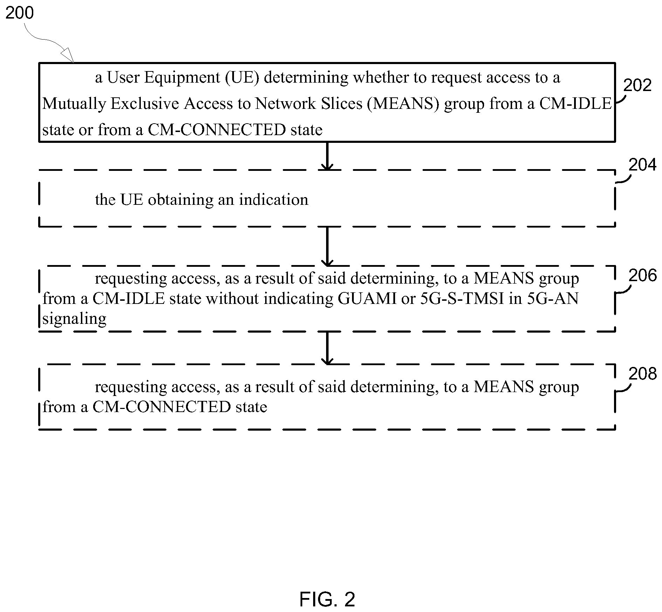

FIG. 2 illustrates a process 200 according to some embodiments. Process 200 is a method that includes a User Equipment (UE) determining whether to request access to a Mutually Exclusive Access to Network Slices (MEANS) group from a CM-IDLE state or from a CM-CONNECTED state (step 202).

In some embodiments, the method further includes the UE obtaining an indication (step 204). The determining whether to request access to a MEANS group from a CM-IDLE state or from a CM-CONNECTED state further comprises using the indication.

In some embodiments, obtaining the indication comprises receiving the indication from an AMF. In embodiments, the indication is contained in a Registration Accept message and/or a UE Configuration Update message. In embodiments, the indication is configured in the UE.

In some embodiments, the UE determines to request access to a MEANS group from a CM-IDLE state. The method may further include requesting access, as a result of said determining, to a MEANS group from a CM-IDLE state without indicating GUAMI or 5G-S-TMSI in 5G-AN signaling (step 206).

In some embodiments, the UE determines to request access to a MEANS group from a CM-CONNECTED state. The method may further include requesting access, as a result of said determining, to a MEANS group from a CM-CONNECTED state (step 208).

In some embodiments, the indication contains information about one or more MEANS groups that the UE may change to while being connected to a current AMF.

In some embodiments, the UE makes the determination independent of UE awareness of MEANS groups. In some embodiments, the UE makes the determination when the UE adds new S-NSSAIs to the Requested NSSAI relative to the Allowed NSSAI. In some embodiments, the UE makes the determination when the UE removes S-NSSAIs in the Requested NSSAI relative to the Allowed NSSAI. In some embodiments, the UE makes the determination when the UE completely changes the S-NSSAIs in the Requested NSSAI relative to the Allowed NSSAI.

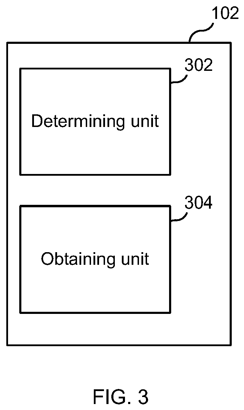

FIG. 3 is a diagram showing functional modules of UE 102 according to some embodiments. As shown in FIG. 2, UE 102 includes a determining unit 302 and an obtaining unit 304. Determining unit 302 may be configured to determine whether to request access to a Mutually Exclusive Access to Network Slices (MEANS) group from a CM-IDLE state or from a CM-CONNECTED state. Obtaining unit 304 may be configured to obtain an indication. In some embodiments, determining unit 302 is further configured to use the indication to make its determination.

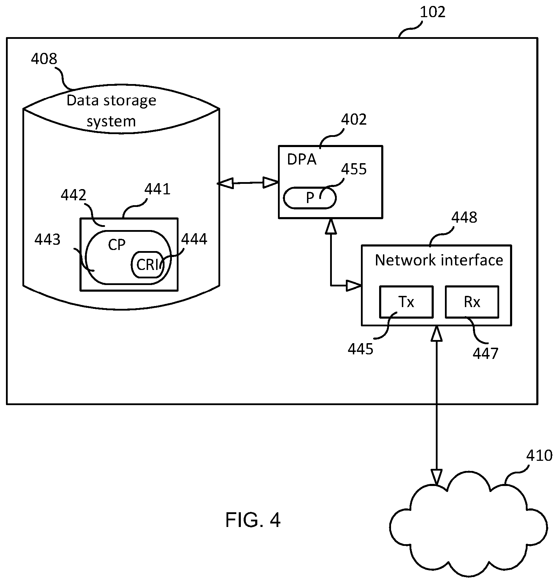

FIG. 4 is a block diagram of UE 102 according to some embodiments. As shown in FIG. 4, UE 102 may comprise: a data processing apparatus (DPA) 402, which may include one or more processors (P) 455 (e.g., a general purpose microprocessor and/or one or more other processors, such as an application specific integrated circuit (ASIC), field-programmable gate arrays (FPGAs), and the like); a transmitter 445 and a receiver 447 coupled to a network interface 448for enabling UE 102 to transmit data to and receive data from an AN node (e.g., base station); and local storage unit (a.k.a., "data storage system") 408, which may include one or more non-volatile storage devices and/or one or more volatile storage devices (e.g., random access memory (RAM)). In embodiments where UE 102 includes a general purpose microprocessor, a computer program product (CPP) 441 may be provided. CPP 441 includes a computer readable medium (CRM) 442 storing a computer program (CP) 443 comprising computer readable instructions (CRI) 444. CRM 442 may be a non-transitory computer readable medium, such as, but not limited, to magnetic media (e.g., a hard disk), optical media, memory devices (e.g., random access memory), and the like. In some embodiments, the CRI 444 of computer program 443 is configured such that when executed by data processing apparatus 402, the CRI causes UE 102 to perform steps described above (e.g., steps described above with reference to the flow charts). In other embodiments, UE 102 may be configured to perform steps described herein without the need for code. That is, for example, data processing apparatus 402 may consist merely of one or more ASICs. Hence, the features of the embodiments described herein may be implemented in hardware and/or software.

Embodiments herein can be used as a complement when the UE has learned which S-NSSAIs are part of which MEANS group, or it can be used independent of such knowledge.

Mutually Exclusive Access to Network Slices: The access to Network Slices is considered to be mutually exclusive for a UE when their respective S-NSSAIs are both present in the UE's subscription and the UE is prevented from accessing both S-NSSAIs simultaneously.

For the purpose of this discussion, a MEANS group is assumed to be one or more Network Slices which are Mutually Exclusive from other Network Slices. Other names may be used to refer to one or more Network Slices which are Mutually Exclusive from other Network Slices.

In Rel-15 a UE likely will simply try to add another S-NSSAI from the Configured NSSAI while the UE is in CM-CONNECTED or from CM-IDLE while still indicating the valid GUAMI. However, MEANS seems to drive the need for the UE to access the network again from CM-IDLE without indicating GUAMI from old registration so as to allow the 5G-AN to select 5GC based on Requested NSSAI. The other option would be to allow re-allocation to new slices while the UE is in state CM-CONNECTED which is not yet fully functional. Later 3GPP releases (e.g., as part of FS_ETSUN study item) may solve it, but it seems uncertain whether that will be enabled in Rel-16. Independent of if it is enabled by FS_ETSUN, it is not certain that such functionality will be possible to use for moving a UE between MEANS groups. However, as to not requiring the UEs to go through CM-IDLE when re-allocation of network slices are possible while in CM-CONNECTED it is proposed that the network should be able to indicate whether the UE shall request access to other MEANS group from CM-IDLE (i.e. to trigger the 5G-AN to do the selection) or whether UE can request it while the UE is connected to the current AMF i.e. in CM-CONNECTED (i.e. as 5GS will enable re-allocation even if e.g. PDU Session for another MEANS group is established) or in CM-IDLE while still indicating the GUAMI.

Such indication can be used together with any of the existing solutions i.e. it should be seen as an add on to any available solution. The indication is either provided together with information about the MEANS groups provided to the UE, or the indication can be sent by the AMF separately. If sent separately, the information could be to which MEANS group(s) the UE may use the more efficient change while being connected to the current AMF i.e. while in CM-CONNECTED.

Additional information/indication can be sent as whether the MEANS group can or shall be accessed while in CM-IDLE without indicating GUAMI or 5G-S-TMSI in 5G-AN signalling. As an option or additional enhancement, the network, e.g. AMF, may indicate to which MEANS groups the UE can use the more efficient re-allocation while staying in CM-CONNECTED for the current Registration (Allowed NSSAI). The network, e.g. AMF, may provide such information as part of the Registration Accept message or as part of UE Configuration Update procedure.

Embodiments enable the UE to know whether an efficient re-allocation/change of Network Slices (e.g. changing the Requested NSSAI compared to Allowed NSSAI by e.g. adding more S-NSSAIs from the Configured NSSAI) or MEANS group can be enabled while the UE is in CM-CONNECTED or whether the UE has to go through CM-IDLE state.

Exemplary scenarios where embodiments can be used are described below.

Mutually Exclusive Access to Network Slices via the use of URSP: The additional information is sent as part of the URSP rules and/or can be sent explicitly by the AMF at Registration or UCU procedures.

Mutually Exclusive Access to Network Slices via UE configuration: The additional information is configured in the UE, and/or can be sent explicitly by the AMF at Registration or UCU procedures.

Mutual exclusion awareness in UE: The additional information is provided to the UE together with the Mutual Exclusion Class Information proposed in the solution to be provided with the Configured NSSAI, and/or can be sent explicitly/separately by the AMF at Registration or UCU procedures.

Slicing Group Support for Mutually Exclusive Access to Network Slices: The additional information is provided to the UE together with the Slicing Group Identifier proposed in the solution to be provided either as a separate parameter from the S-NSSAI (that can be provided as part of the Configured NSSAI and Allowed NSSAI) or the Slicing Group Identifier is part of the SD (which is a part of the S-NSSAI including SST and optionally SD). Therefore, the additional information would be sent together with the S-NSSAI i.e. in or together with the Configured NSSAI and/or Allowed NSSAI using the Registration or UCU procedures.

Mutually Exclusive Access to Network Slices using existing mechanisms: The additional information is provided to the UE by the AMF at Registration or UCU procedures.

Enabling access control to network slices that cannot be accessed simultaneously: The additional information is provided to the UE together with the Network Slice exclusion rules by the AMF at Registration or UCU procedures, or separated from the Network Slice exclusion rules at Registration or UCU procedures.

Solutions for MEANS via Slicing Group Indication: The additional information is provided to the UE together with the MEAG IDs (in or together with Configured NSSAI) by the AMF at Registration or UCU procedures, or separated from the MEAG IDs at Registration or UCU procedures.

The mentioned procedures in the above solutions can be found in TS 23.502:

Registration Accept is part of the Registration procedure, e.g. see clause 4.2.2.2.2.

The UE Configuration Update procedure enables the possibility for the network to update the UE, e.g. see clause 4.2.4.

While various embodiments of the present disclosure are described herein (including the appendices, if any), it should be understood that they have been presented by way of example only, and not limitation. Thus, the breadth and scope of the present disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method comprising:
a User Equipment, UE, (102) determining (202) whether to request access to a Mutually Exclusive Access to Network Slices, MEANS, group from a CM-IDLE state or from a CM-CONNECTED state;
the method further comprising:
requesting (206) access, as a result of said determining, to a MEANS group from a CM-IDLE state without indicating GUAMI or 5G-S-TMSI in 5G-AN signaling, or
the UE determines to request access to a MEANS group from a CM-CONNECTED state, requesting (208) access, as a result of said determining, to a MEANS group from a CM-CONNECTED state.

2. The method of claim 1, further comprising:
the UE obtaining (204) an indication,
wherein said determining whether to request access to a MEANS group from a CM-IDLE state or from a CM-CONNECTED state further comprises using the indication.

3. The method of claim 1 or 2, wherein obtaining the indication comprises receiving the indication from an AMF.

4. The method of any one of claims 1 to 3, wherein:
- the indication is contained in a Registration Accept message and/or a UE Configuration Update message, and/or
- the indication is configured in the UE.

5. The method of any one of claims 1 to 4, wherein the indication contains information about one or more MEANS groups that the UE may change to while being connected to a current AMF.

6. The method of any one of claims 1 to 5, wherein the UE makes the determination independent of UE awareness of MEANS groups, and, optionally, wherein:
- the UE makes the determination when the UE adds new S-NSSAIs to the Requested NSSAI relative to the Allowed NSSAI, or
- the UE makes the determination when the UE removes S-NSSAIs in the Requested NSSAI relative to the Allowed NSSAI, or
- the UE makes the determination when the UE completely changes the S-NSSAIs in the Requested NSSAI relative to the Allowed NSSAI.

7. A User Equipment, UE, (102) adapted to:
determine (202) whether to request access to a Mutually Exclusive Access to Network Slices, MEANS, group from a CM-IDLE state or from a CM-CONNECTED state;
wherein the UE is **characterized by** to be further adapted to determine to request access to a MEANS group from a CM-IDLE state,
request access, as a result of said determining, to a MEANS group from a CM-IDLE state without indicating GUAMI or 5G-S-TMSI in 5G-AN signaling, or determine to request access to a MEANS group from a CM-CONNECTED state,
request access, as a result of said determining, to a MEANS group from a CM-CONNECTED state.

8. The UE of claims 7, the UE further adapted to:
obtain (204) an indication,
wherein said determining whether to request access to a MEANS group from a CM-IDLE state or from a CM-CONNECTED state further comprises using the indication.

9. The UE of claim 7 or 8, wherein obtaining (204) the indication comprises receiving the indication from an AMF.

10. The UE of any one of claims 7 to 9, wherein:
- the indication is contained in a Registration Accept message and/or a UE Configuration Update message, and/or
- the indication is configured in the UE.

11. The UE of any one of claims 7 to 10, wherein the indication contains information about one or more MEANS groups that the UE may change to while being connected to a current AMF.

12. A computer program (443), comprising instructions (444) which, when executed on at least one processor (455), causes the at least one processor to carry out the method according to any one of claims 1 to 6.

13. A carrier comprising the computer program of claim 12, wherein the carrier is one of an electronic signal, optical signal, radio signal or computer readable storage medium.

## Patentansprüche

1. Verfahren, umfassend:
dass eine Benutzerausrüstung, UE, (102) bestimmt (202), ob Zugriff auf eine Gruppe mit gegenseitig exklusivem Zugriff auf Netzwerk-Slices, MEANS, aus einem CM-IDLE-Zustand oder aus einem CM-CONNECTED-Zustand angefordert werden soll;
das Verfahren weiter umfassend:
Anfordern (206), als Ergebnis des Bestimmens, von Zugriff auf eine MEANS-Gruppe aus einem CM-IDLE-Zustand, ohne GUAMI oder 5G-S-TMSI in der 5G-AN-Signalisierung anzugeben, oder
wenn die UE bestimmt, Zugriff auf eine MEANS-Gruppe aus einem CM-CONNECTED-Zustand anzufordern, Anfordern, als Ergebnis des Bestimmens, von Zugriff (208) auf eine MEANS-Gruppe aus einem CM-CONNECTED-Zustand.

2. Verfahren nach Anspruch 1, weiter umfassend:
dass die UE eine Angabe erhält (204),
wobei das Bestimmen, ob Zugriff auf eine MEANS-Gruppe aus einem CM-IDLE-Zustand oder aus einem CM-CONNECTED-Zustand angefordert werden soll, weiter Verwenden der Angabe umfasst.

3. Verfahren nach Anspruch 1 oder 2, wobei Erhalten der Angabe Empfangen der Angabe von einer AMF umfasst.

4. Verfahren nach einem der Ansprüche 1 bis 3, wobei:
- die Angabe in einer Registrierungsannahmenachricht und/oder einer UE-Konfigurationsaktualisierungsnachricht enthalten ist und/oder
- die Angabe in der UE konfiguriert ist.

5. Verfahren nach einem der Ansprüche 1 bis 4, wobei die Angabe Informationen über eine oder mehrere MEANS-Gruppen enthält, zu denen die UE wechseln kann, während sie mit einer aktuellen AMF verbunden ist.

6. Verfahren nach einem der Ansprüche 1 bis 5, wobei die UE die Bestimmung unabhängig von der Kenntnis der MEANS-Gruppen seitens der UE vornimmt, und optional, wobei:
- die UE die Bestimmung vornimmt, wenn die UE neue S-NSSAIs zu der angeforderten NSSAI in Bezug auf die zulässigen NSSAI hinzufügt, oder
- die UE die Bestimmung vornimmt, wenn die UE S-NSSAIs in der angeforderten NSSAI in Bezug auf die zulässigen NSSAI entfernt, oder
- die UE die Bestimmung vornimmt, wenn die UE die S-NSSAIs in der angeforderten NSSAI in Bezug auf die zulässigen NSSAI vollständig ändert.

7. Benutzerausrüstung, UE, (102), die angepasst ist zum:
Bestimmen (202), ob Zugriff auf eine Gruppe mit gegenseitig exklusivem Zugriff auf Netzwerk-Slices, MEANS, aus einem CM-IDLE-Zustand oder aus einem CM-CONNECTED-Zustand angefordert werden soll;
wobei die UE **dadurch gekennzeichnet ist, dass** sie weiter angepasst ist zum:
- Bestimmen, ob Zugriff auf eine MEANS-Gruppe aus einem CM-IDLE-Zustand angefordert werden soll,
Anfordern, als Ergebnis des Bestimmens, von Zugriff auf eine MEANS-Gruppe aus einem CM-IDLE-Zustand, ohne GUAMI oder 5G-S-TMSI in der 5G-AN-Signalisierung anzugeben, oder
- Bestimmen, ob Zugriff auf eine MEANS-Gruppe aus einem CM-CONNECTED-Zustand angefordert werden soll,
Anfordern, als Ergebnis der Bestimmung, von Zugriff auf eine MEANS-Gruppe aus einem CM-CONNECTED-Zustand.

8. UE nach Anspruch 7, wobei die UE weiter angepasst ist zum:
Erhalten (204) eine Angabe,
wobei das Bestimmen, ob Zugriff auf eine MEANS-Gruppe aus einem CM-IDLE-Zustand oder aus einem CM-CONNECTED-Zustand angefordert werden soll, weiter Verwenden der Angabe umfasst.

9. UE nach Anspruch 7 oder 8, wobei Erhalten (204) der Angabe Empfangen der Angabe von einer AMF umfasst.

10. UE nach einem der Ansprüche 7 bis 9, wobei:
- die Angabe in einer Registrierungsannahmenachricht und/oder einer UE-Konfigurationsaktualisierungsnachricht enthalten ist und/oder
- die Angabe in der UE konfiguriert ist.

11. UE nach einem der Ansprüche 7 bis 10, wobei die Angabe Informationen über eine oder mehrere MEANS-Gruppen enthält, zu denen die UE wechseln kann, während sie mit einer aktuellen AMF verbunden ist.

12. Computerprogramm (443), das Anweisungen (444) umfasst, die, wenn sie auf mindestens einem Prozessor (455) ausgeführt werden, bewirken, dass der mindestens ein Prozessor das Verfahren nach einem der Ansprüche 1 bis 6 durchführt.

13. Träger, der das Computerprogramm nach Anspruch 12 umfasst, wobei der Träger eines ist von einem elektronischen Signal, optischen Signal, Funksignal oder computerlesbaren Speichermedium.

## Revendications

1. Procédé comprenant :
un équipement d'utilisateur, UE, (102) déterminant (202) s'il faut demander l'accès à un groupe d'accès mutuellement exclusif aux tranches de réseau, MEANS, à partir d'un état CM-IDLE ou à partir d'un état CM-CONNECTED ;
le procédé comprenant en outre :
la demande (206) d'accès, suite à ladite détermination, à un groupe MEANS à partir d'un état CM-IDLE sans indiquer GUAMI ou 5G-S-TMSI dans la signalisation 5G-AN, ou
l'UE détermine qu'il faut demander l'accès à un groupe MEANS à partir d'un état CM-CONNECTED, la demande (208) d'accès, à la suite de ladite détermination, à un groupe MEANS à partir d'un état CM-CONNECTED.

2. Procédé selon la revendication 1, comprenant en outre :
l'obtention (204) d'une indication par l'UE,
dans lequel ladite détermination pour établir s'il faut demander l'accès à un groupe MEANS à partir d'un état CM-IDLE ou à partir d'un état CM-CONNECTED comprend en outre l'utilisation de l'indication.

3. Procédé selon la revendication 1 ou 2, dans lequel l'obtention de l'indication comprend la réception de l'indication d'une AMF.

4. Procédé selon l'une quelconque des revendications 1 à 3, dans lequel :
- l'indication est contenue dans un message d'acceptation d'inscription et/ou un message de mise à jour de configuration UE, et/ou
- l'indication est configurée dans l'UE.

5. Procédé selon l'une quelconque des revendications 1 à 4, dans lequel l'indication contient des informations concernant un ou plusieurs groupes MEANS pour lesquels peut opter l'UE lorsqu'il est connecté à une AMF actuelle.

6. Procédé selon l'une quelconque des revendications 1 à 5, dans lequel l'UE effectue la détermination indépendamment du fait que l'UE soit informé des groupes MEANS, et, éventuellement, dans lequel :
- l'UE effectue la détermination lorsque l'UE ajoute de nouveaux S-NSSAI au NSSAI demandé par rapport au NSSAI autorisé, ou
- l'UE effectue la détermination lorsque l'UE supprime les S-NSSAI dans le NSSAI demandé par rapport au NSSAI autorisé, ou
- l'UE effectue la détermination lorsque l'UE modifie complètement les S-NSSAI dans le NSSAI demandé par rapport au NSSAI autorisé.

7. Équipement d'utilisateur, UE, (102) conçu pour :
déterminer (202) s'il faut demander l'accès à un groupe d'accès mutuellement exclusif aux tranches de réseau, MEANS, à partir d'un état CM-IDLE ou à partir d'un état CM-CONNECTED ;
dans lequel l'UE est **caractérisé en ce qu'**il est en outre conçu pour :
- déterminer qu'il faut demander l'accès à un groupe MEANS à partir d'un état CM-IDLE,
demander l'accès, suite à ladite détermination, à un groupe MEANS à partir d'un état CM-IDLE sans indiquer GUAMI ou 5G-S-TMSI dans la signalisation 5G-AN, ou
- déterminer qu'il faut demander l'accès à un groupe MEANS à partir d'un état CM-CONNECTED,
demander l'accès, suite à ladite détermination, à un groupe MEANS depuis un état CM-CONNECTED.

8. UE selon la revendication 7, l'UE est en outre conçu pour :
obtenir (204) une indication,
dans lequel ladite détermination pour établir s'il faut demander l'accès à un groupe MEANS à partir d'un état CM-IDLE ou à partir d'un état CM-CONNECTED comprend en outre l'utilisation de l'indication.

9. UE selon la revendication 7 ou 8, dans lequel l'obtention (204) de l'indication comprend la réception de l'indication d'une AMF.

10. UE selon l'une quelconque des revendications 7 à 9, dans lequel :
- l'indication est contenue dans un message d'acceptation d'inscription et/ou un message de mise à jour de configuration UE, et/ou
- l'indication est configurée dans l'UE.

11. UE selon l'une quelconque des revendications 7 à 10, dans lequel l'indication contient des informations concernant un ou plusieurs groupes MEANS pour lesquels peut opter l'UE lorsqu'il est connecté à une AMF actuelle.

12. Programme informatique (443) comprenant des instructions (444) qui, lorsqu'elles sont exécutées sur au moins un processeur (455), amènent le au moins un processeur à mettre en œuvre le procédé selon l'une quelconque des revendications 1 à 6.

13. Support contenant le programme informatique selon la revendication 12, dans lequel le support est l'un parmi un signal électronique, un signal optique, un signal radio ou un support de stockage lisible par ordinateur.
